(19) Europäisches Patentamt
European Patent Office
Office européen des brevets

(11) EP 2 634 151 A1

(12) EUROPEAN PATENT APPLICATION

(43) Date of publication:
04.09.2013 Bulletin 2013/36

(51) Int Cl.:
C04B 14/28 (2006.01)     C04B 28/02 (2006.01)
C04B 40/00 (2006.01)

(21) Application number: 12001320.6

(22) Date of filing: 28.02.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Omya Development AG
4665 Oftringen (CH)

(72) Inventors:
• Skovby, Michael
  8706 Meilen (CH)
• Gonnon, Pascal
  01480 Villeneuve (FR)

(74) Representative: Richebourg, Michel François
Cabinet Michel Richebourg
"Le Clos du Golf"
69, rue Saint-Simon
42000 Saint Etienne (FR)

(54) **Process for the preparation of cement, mortars, concrete compositions containing calcium carbonate-based filler(s) (pre) - treated with ultrafine (UF) filler(s), compositions and cement products obtained and their applications**

(57)     Process for the preparation of **"High performance"**, **"HP"**, or **"FLUID"**, or **"technical"**, cement or mortars or concrete systems or compositions (hereafter for simplicity **"cements"** or **"cements systems"** or **"cement compositions"** or **"cements"**) having an improved **compacity**, an improved **flowability** (and globally speaking a definitely improved **"workability"**; Product consisting of, or comprises, a blend of coarse (or optionally HP) "calcium carbonate—based filler(s)" pre-blended with at least an UF; CEMENT COMPOSITIONS incorporating the said blend or aqueous composition, namely the said blend of low or medium (or optionally HP) coarse filler(s) treated with at least one UF; USE of the said blend, or aqueous compositions and cement composition.

Fig. 1

EP 2 634 151 A1

**Description**

**TECHNICAL FIELD OF THE INVENTION**

The present invention relates to the field of cement compositions, cementitious compositions, hydraulic binders compositions, mortar compositions, concrete "compositions" (or hereafter equivalently "systems"), namely of the type of compositions (or "systems") of cement/hydraulic binders, mortars, concrete, containing at least one particulate mineral of the calcium carbonate(s) type as filler(s), and their applications, as well as the corresponding cement, mortar, concrete products or elements, the said fillers) being carbonate-based fillers being "upgraded" according to the invention from a "standard" (low or medium) level to a "technical" or "high performance" ("HP") level of performance due to a process which is the essential part of the invention.

The invention relates to a specific process for producing the said "compositions" or "systems" **(those terms are going to be used as equivalents in this application and claims)** for cement, hydraulic binder, mortar, concrete, the obtained compositions, the cement, mortars and concrete products obtained therefrom, and their applications.

**PRIOR ART**

*CEMENT*: It is reminded that a cement system (or equivalently "composition") is a system comprising

- cement particles,

- mixing water (or equivalently a mixing aqueous composition not interfering with the said system, as known to the skilled man; **hereafter "water" or "mixing water"** when advisable for simplicity),

- filler(s), usually carbonate-based filler(s)

- various optional and usual additives such as air entrainment agents, setting retarders, setting accelerators and the like, and any such routine , optional additives as well known to the skilled man like fluidifiers.

*MORTAR:* A mortar system **additionally** contains an inert aggregate material, usually a sand.

*CONCRETE*: A concrete system **still additionally** contains gravel.

The above is abundantly known and common knowledge.

*CEMENT SYSTEMS* or CEMENTS (or compositions or slurries thereof) :

As a matter of simplicity, and also because the invention indifferently relates to the use of additives adapted to improve or "upgrade" the properties of any of those three systems, the term **"cement systems"** or equivalently **"cement compositions"** or **"slurries"** or even for simplicity **"cements"** will be used in the present specification and claims to encompass ANY of the above main kinds of compositions or "systems", and routine derivatives or variants thereof, that is a cement (and/or a cementitious, hydraulic binder), or a mortar or concrete composition or system containing such a cement and/or cementitious hydraulic binder, plus the above mentioned components as is well known.

The invention also applies to "technical equivalents" thereof, such as for example systems containing routine additives, or using aqueous systems as aqueous mix system (hereafter together "mix water" or "water"), or using cementitious compositions as know to the skilled man instead of a cement, as long as their function is about the same and the results are also about the same, as can be easily checked by the skilled man or known to him.

The skilled man will be able to appreciate if the system is a cement, a mortar or a concrete composition in view of the presence, or the absence, namely, of sand and/or gravel. This simplification is made possible since sand and gravel are inert materials, and therefore do not noticeably interfere with the invention.

It is also pointed out that, even if, in the following, an information is provided regarding "cement systems" for example, it ALSO applies *mutatis mutandis* to any of the above cited other kinds of systems. The only difference between the systems being the presence, or not, of , namely, sand and/or gravel.

*FLUIDIFIERS* :In such compositions, fluidifier(s) is/are often routinely used. They are usually placed at the bottom of the mixing or kneading device to somewhat help fluidifying the cement ingredients namely aggregates.

In that domain, the EP 0 663 892 to CHRYSO is certainly the most relevant document, which discloses fluidifier polymers for mineral suspensions with no hydraulic setting , or hydraulic binders slurries.

Cited applications are paper coating, paints, and synthetic resins or rubber compositions.

According to the said prior art, it was known to add fluidifiers in mineral, particular suspensions to lower their viscosity, and, especially for paper applications, this leads to high mineral concentrations, a better workability, and this reduces the drying energy. For example, this is used in connection with suspensions of calcium carbonate.

It is also known to add such fluidifiers to "cements" **(in the wide sense explained hereabove)** slurries, with the purpose this time of reducing their water demand and to obtain a "cement" composition with a "more dense structure" after setting.

Some well-known fluidifiers or plastifiers are also superplastifiers under certain conditions.

In that domain, FR 2 815 627, FR 2 815 629 and WO2008/107790 disclose superplastifiers.

Some known fluidifiers or dispersants are known to affect less the setting time, but are still unsatisfactory, such as condensation products of sulfonated naphtalene and formaldehyde or melamine-formaldehyde with a sulfonated compound. Some of those products are also superplastifiers, but much less preferred.

Also, EP 0 099 954 relates to fluidifiers made by condensation of amino- sulfonic acid comprising at least an aromatic ring with nitrogenated compounds bearing several amine functions and formaldehyde.

Such additives can possibly be used at the usual dosages in the present invention, as *routine "adjustment" fluidifier additives* known to the skilled man as well as how to use them. By "adjustment" it is meant that they are NO "treating" agents, just fluidifers used in minor, routine amounts to finely adjust viscosity, as is well known to the skilled man.

The summary of the desired properties is listed page 3 lines 15 ff of the above-mentioned EP to CHRYSO.

In the present application, the main technical problem to solve is to avoid the need for any chemical "treatment" that is to avoid the need for a treatment with a superplastifier as disclosed in unpublished EPA 10 008 803.8.

*FILLERS* : Much more importantly, It is also known to add filler(s) in cement, hydraulic binders, cementitious or concrete or mortars compositions or "systems" (for simplicity, "cements")

The purpose of adding such filler(s) is to fill the voids between particles, to reduce the overall costs, and to greatly improve a property called "consistency" (consistency being the capacity or ability for the considered systems to easily flow or "self-level", or not) and a property called "compacity" (that is the percentage of dry material in the final composition (the higher the percentage, the better the compacity)).

*- carbonate- based filler (s)* : the usable filler (s) is/are defined as "carbonate- based filler (s) " (or equivalently "calcium carbonate based fillers") that is, in the specification and claims, fillers that contain (s) only calcium carbonate (s) (possibly of various origins, such as various natural rocks (GCCs) or various PCCs ) (which means *with no other filler of a different type,* such as kaolin, bentonite, etc.) known to the skilled man, and is/are preferably provided (when the filler (s) is/are or contain (s) GCC (s) ) by a carbonated rock or more generally mineral material (s) comprising at least 50- 65 % by weight (dry) of $CaCO_3$, preferably more than 80 %, still more preferably more than 90 %;

Those filler(s)s are selected among:

- natural calcium carbonate(s) or ground calcium carbonate(s) (GCC(s)) such as, non limitatively, GCC from marble, chalk, calcite, or from other natural and well-known forms of natural calcium carbonates which much preferably meet the above % criteria while they may somewhat deviate if not detrimental;

- PCC(s) which is a fine to ultrafine precipitated calcium carbonate, and exists under various well-known forms, depending on the well-known precipitation/preparation process.

- or a mixture of said $CaCO_3$ - containing rocks or mineral materials with each other as well as blends or mixtures of GCC(s) and PCC(s).

The GCC / PCC ratio can be chosen from 0 - 100 to 100 - 0 % by dry weight, preferably from 30 - 70 to 70 /30 % by dry weight.

Usually a "filler" has the following properties:

- Purity (methylene blue test) is lower than 10 g/ kg , preferably below 3
- 5 g/kg, preferably below 1 - 1,5 g , with a most interesting value at 1.2 g/kg.
- Mean diameter or $d_{50}$ is about in the range of 1 - 3 to 30 - 50 micrometres measured by using the Malvern 2000 PSD equipment/methodology, or Sedigraph.

As will be seen below, the d50 range of 1 - 5 - 6 microns corresponds, for the fillers featuring a Blaine surface above about 1000 m2/kg, (or an equivalent high specific surface such as BET((specific surface area measured using nitrogen and BET method according to ISO 9277)) to *ultrafine fillers (UFs)*; d50 above 6 microns is the domain of coarser or coarse fillers, hereafter *"fillers". In this application, when ultrafine fillers are considered, the wording "ultrafine " or "ultrafine fillers" or "UF" will be used.*

In this invention "filler(s)" means coarse "calcium carbonate based filler(s)" which have been precisely defined hereabove, that is fillers containing under any known form (namely GCCs and/or PCCs), only $CaCO_3$ particulate material, plus optionally some other inert filler particles or fibrous material such as hemp etc.... We point out here that in this application, **"fillers"** means "d50 above 6 microns" that is **coarse fillers.** When to the contrary **ultrafine filler(s)** are used in the present invention, the wording **"UF(s)"** or **"ultrafine"** is used.

It was not disclosed in the above quoted EPA to treat such a coarse "filler" with at least one ultrafine filler (hereafter "UF") since there existed a strong prejudice against mixing a coarse filler with an UF. Actually, the then predictable result of such a blend would have been an unworkable mix of coarse and ultrafine particles that could lead only to some undefined "mud" instead of a workable slurry.

Actually the expected difficulties have been encountered but overcome by further R&D work and treatment with at least on UF filler.

- Blaine surface, which is a characteristic feature of any filler, as is well-known, is in the domain of 180 - 2000 m$^2$ / kg, preferably of 300 to 800 m$^2$/kg, as measured under an EU Standard (European standard EN 196 - 6).

As discussed above, UFs have a Blaine surface above about 1000 m2/Kg or above about 1500 m2/kg , in addition to a d50 below 5 - 6 microns.

It may happens that the Blaine surface could not be measured; in such a case, one uses the standardized BET surface.

As is known, a **"cement" (in the above mentioned wide sense)** composition or "system" is mainly made of:

Cement (or cementitious composition or hydraulic binder)

+ mixing water (or mixing aqueous composition allowing setting but not interfering with the system)

+ (usually inert) particulate and/or fibrous filler(s)

+ inert agglomerate(s) as the case may be such as optionally sand + optionally inert gravel

+ optionally well known "adjustment" additives not to be mentioned in detail nor in full in the present application, such as above mentioned fluidifier (s) , setting accelerators, setting retarders, air entrainment agents, etc...)

+ miscellaneous "routine" additives aimed at matching the precise need of the end-user.

*Aggregates* such as sand, inert gravel or "all - in" aggregates are known materials so commonly used that no description is needed here.

Just to be fully understood, and as discussed above, the invention relates also equivalently (under the generic term "cement" for simplicity) to **mortars** compositions or "systems" (like above including an aggregate like sand but no gravel) and **concrete** compositions (same as above but containing gravel and sand).

**"Mainly"** means here that the system may contain some impurities or traces of additives or adjuvants, not to be mentioned in the present application, such as air entrainment agents, accelerators, retarders, etc.

**"Mixing water"** (or **"water"**) will mean in this patent application plain mix water or aqueous mixing compositions, that is mainly water plus usual additives, allowing the normal setting of the "cement" compositions, without interfering with the other properties of the overall composition, or only, via the additives, to improve some usual properties.

*"Adjustments additives"* : this covers additives or adjuvants and similar routine component which are known to the skilled man, whose use, dosage, function etc.... are known to the skilled man, and which are routinely used to "finely tune" or "adjust" certain desired properties such as setting time, rheology, namely fluidifiers, etc...., to match the precisely defined final use.

As to the setting time the skilled man may refer to the DIN Standard EN 196-3 . *"inert"* (or *"not interfering with the process"*) shall mean In this whole application and claims, a material which has no noticeable (or negligible) impact or interference with the process of the invention and the obtained compositions, properties, products and applications. Given the involved ingredients, this will be easily appreciated by any skilled man.

***DRY, PLASTIC or FLUID systems:***

It is also known that cement / hydraulic binders / cementitious compositions, cements, mortars and concrete compositions (for simplicity, **"cements"**) can be basically sorted out into:

- **DRY** systems **(poor** quality or **"low")** (casting is performed with high vibration and energy).

- **PLASTIC** systems **(medium** quality) ( medium vibration and energy).

(The two above categories may also be named **"standard"**)

- **FLUID** systems **(High performance or "HP")** (low vibration and low energy).

*Self-leveling test:*

A very simple test is routinely used to classify the systems, using a "mini cône à chape" known as **"self-levelling test"** or **"screed flow cone test".**

The test is well known and is conducted as follows, according to the recognized **Standard EN 196 - 1;** the said standard defines accurately the mixer or kneading (also malaxing) device to be used, the speed of rotation, and each and every such data useful for reproducing the test. Therefore, no more explanations or definitions are needed here for the sake of clarity or reproducibility. The test is described herebelow.

Basically, a cement or mortar or concrete "system" is prepared by mixing the above ingredients according to usual practice, recalled here- below in more detail though the process conditions are well known, then is poured in accordance with the above Standard conditions, into an inverted cone which is perforated at its bottom (dimensions are also given by the said Standard as well as each and every useful data of the test) .

The cement or mortar or concrete system therefore flows into and out of the said cone, namely through its bottom aperture, and falls onto an horizontal plate to form a "chape" ("screed").

It there forms a **"galette"** or improperly **"cone"** *(since the "cone" is rather the device)* also known as **"dry to plastic form"** or **"cone spread"** (that is, actually, the result of the spreading and levelling of the volume of cement composition poured from the test cone onto the receiving surface: obviously, the diameter will be a function of such parameters as fluidity, more generally rheology, etc... as known) whose diameter is measured, and aspect visually inspected for example for stickiness and "thickness", the latter property reflecting a "slow" or "viscous" mix, that is, if "thick", hard to handle.

The larger the diameter, the more **"flowable"** the system.

For a given high consistency, as targeted by the invention, this is the major test, since high consistency (or **highly concentrated)** CaCO3 slurries are often less flowable than low consistency compositions for obvious reasons.

Given the quality of the initial filler to be used in the concrete system, namely its place of production, morphology etc. the resulting "cone" or "galette" will vary in diameter, this indicating a variation in flowability. Attention has also to be paid to the "cone" used (size etc...) , which plays a role in the obtained diameter. All this is abundantly known to the skilled man and defined by the Standards.

As an example,

- a GCC which is known to use no or almost no mixing water, and shows such valuable properties, will lead to a very fluid, non sticky cement or concrete composition. Such a composition will be fully usable for **"technical"** (that is, **"high performance"** or **"HP")** concrete compositions, called "FLUID" above.

- If to the contrary, the selected filler namely GCC filler is known to absorb or uses a noticeable amount of water, or contains some impurities, etc. the resulting composition will be less fluid and become to be somewhat sticky. The end user will be forced *inter alia* to either add a corrective "adjustment" adjuvant (with an associated extra cost and an associated risk of secondary effect of the composition as a whole) and / or add extra water (thus being detrimental to consistency and inducing associated risks). Those compositions will be used for medium quality compositions, called "PLASTIC" hereabove.

- At the other end of the ladder, using a filler namely a GCC of poor quality will lead to a composition which will exit the mixer under the form of sticky granulates. Those will be used only for DRY concrete compositions, NOT part of the invention.

- The same is valid *mutatis mutandis* when using a PCC or a GCC/PCC blend.

The test will be absolutely sufficient for a skilled man to rate the starting GCC and / or PCC (s), as well as the final composition.

In order to provide the skilled man with useful guidelines and information about the meaning of "low", "medium" or "HP" filler, we attach the **TABLE A** where ten fillers A to K of various origin and morphology (as indicated for characterization by the skilled man) have been tested for various properties and qualities, or drawbacks, with the classification "low" "medium" or "HP" being added on each line.

**TABLE A**

| Characterization of "low", "medium", "HP" fillers and their aspect | | | | | | | | | |
|---|---|---|---|---|---|---|---|---|---|
| Treatment Agent Code | geological designation (age) | Type | d50 | Blaine | Blue (Methylene Blue Test) | (3g) | (4g) | Evaluation | visual evaluation |
| A | white chalk facies (90 Mi) | chalk | 1,0 | >1400 | 2,0 | plastic aspect | 220 | low | slow, very thick |
| B | white chalk facies (90 Mi) | chalk | 2,2 | 1120 | 2,7 | 280 | 340 | medium | thick |
| C | urgonian facies (115 Mi) | calcite | 3,1 | 1171 | 0,3 | 200 | 290 | low | slow, thick |
| D | bioclastic facies (160Mi) | calcite | 6,0 | 720 | 1,0 | plastic aspect | 338 | medium | plastic |
| E | urgonian facies (115 Mi) | calcite | 6,5 | 395 | 0,3 | 460 | 475 | HP | fluid |
| G | upper jurassic (130 Mi) | marble | 17,0 | 363 | 0,3 | dry aspect | 365 | medium | slow, heavy |
| H | upper jurassic (120 Mi) | marble | 13,4 | 385 | 0,3 | 337 | 413 | low | slow, viscous |
| I | H + 5%B | X | X | X | X | 190 | 390 | medium | slow, viscous |
| J | H + 15%B | X | X | X | X | 427 | 436 | HP | fluid |
| K | H + 20%B | X | X | X | X | 340 | 410 | medium | fluid, thick |

One uses 3 g or respectfully 4 g of routine fluidifier **Premia 196™** commercialised by the Firm CHRYSO™, and which is a commercial product at a concentration of 25.3 % by weight (dry extract measured along the **Standard EN 480 - 8),** by DRY weight of cement.

**"Low"** corresponds to a very poor system also called above: **"dry", HP** corresponds to a **"fluid"** (very good) product, also called **"HP" "high performance"** or **"technical",** and **"medium"** is an intermediate or **"plastic"** product .

**Low and medium products need to be upgraded to HP so as to meet the recent requirements of the end user. This is the main objective of the invention.**

**Another objective, which is a strong technical problem, is to upgrade the fillers(s) without using any chemical treating agent.**

In the said **Table A ,** " + 15 % B " evidently means an addition of 15 % of the product B, to form a blend or mix, the % being in DRY WEIGHT / DRY MIX WEIGHT.

Equally, columns "3 g" and " 4 g" means that 3 or respectfully 4 g of the said CHRYSO fluidifier have been added by DRY weight of the cement component alone.

"Mi" means "million years" (dating of the rock)

"Blue" means "methylene blue test" (purity test)

This introduction of this application clearly points out to the need for improved cement or mortar or concrete systems or compositions having a improved **compacity** (% of dry material, the highest possible), an improved **flowability** (that is forming a non sticky "galette" or "cone" of large diameter in the above described test, the larger the diameter, the better flowability), and globally speaking a definitely improved **"workability"** (workability being the ability of the cement or concrete composition to be prepared, processed, handled, and used to form a high performance or "technical" concrete) and a far better **"regularity"** in the final product properties especially at the end user level.

Clearly, some of those desired properties are antagonistic, and for example one should expect a high % dry material to perform poorly in a flowability test.

## TECHNICAL PROBLEM(S) TO BE SOLVED

The main purpose of this invention is to build a process aimed at providing improved, **"High performance"**, **"HP"**, or **"FLUID"**, or **"technical"** cement or mortars or concrete systems or compositions (hereafter for simplicity **"cements"** or **"cements systems" or "cement compositions"**) having an improved **compacity** (percentage of dry material, the highest possible), an improved **flowability** (that is forming a non sticky (more generally, showing a good to excellent performance in the above **"visual inspection"** of Table A) **"galette" or "cone" of large diameter** in the above described test, the larger the diameter, the better flowability), and globally speaking a definitely improved **"workability"** (workability being the ability of the cement or concrete composition to be prepared, processed, handled, and used to form a high performance or "technical" cements, mortars or concrete compositions or systems), the said "cements" using as

- filler(s) low or medium (or standard) carbonate-based filler(s)

- upgraded to an HP or FLUID grade by treatment with at least one UF.

The specific technical problem solved by the present invention is to avoid any chemical "treatment" and to instead provides an upgrade via a **purely "mineral solution".**

The process will be conducted routinely in the presence of a small amount of a fluidifier, between 3 and 4 g of fluidifier, such as 3.4 - 3.7 g, preferably 3.5 g by dry weight /total weight of the cement composition.

In the self levelling test, a **cone diameter of minimum 350 - 380 - 420 mm ,** and preferably **420 mm** or most preferably > **420 mm,** is targeted (COMBINED with a proper visual evaluation that is not sticky etc.... see Table A above): in the **"visual inspection"** the aspect of the "galette" or "cone spread" must have a reasonably fast flow rate, not be sticky or pasty or dry, release as less water as possible, and not be outgassing. It is important to note the products MUST meet those TWO criterias to match the recent requirements by end-users.

In some cases, one can accept a cone diameter near to the 300 - 350 mm range, if the filler is particularly "difficult" to upgrade and if this allows a purely mineral solution to be implemented. The skilled man knows how to design such compromises.

Another property, which does not exists in the prior art, while the industry is strongly demanding it, is **"regularity"** of the properties of the final systems.

It has been surprisingly found according to this invention, that that set of objectives can be reached by treating the "low/medium/standard" carbonate-based filler(s) in the **specific "purely mineral" manner** as disclosed below, with a very impressive technical effect.

## BRIEF SUMMARY OF THE INVENTION

The invention resides first in a

- **PROCESS** for the preparation of the above defined HP "cement" or **"mortar"** or **"concrete"** compositions or systems, (for simplicity hereafter **"cement"** compositions or systems or even "cements"), of a general known type as defined hereabove containing at least one coarse carbonate-based filler, as defined hereabove, characterized in that it comprises at least one step where the said coarse carbonate-based filler(s) is/are treated with an efficient treating amount of at least one treating agent consisting of , or comprising, ultrafine filler(s) particles or "UF(s)".

The said treatment step may be associated in a known manner with some additions of routine, inert additives as is known in the art.

It can be routinely performed in the presence of a "bottom-tank" fluidifier.

The treatment step with an UF may be fractionated, though it is preferable (for practical reasons, nature of the available equipment on site etc...) that they are not. Please see the details below.

**"Ultrafines filler(s) particles"** or more simply **"ultrafines"** or still more simply **"UFs"** which can be used in the present invention can be defined by

- a **d50** from about 1 micron to about 5 or 6 microns, preferably from 1 to 3 microns, and still better of about 2 - 3 microns, usually <5 microns.

- and

- a high specific surface , usually defined as **BLAINE** > 1000 m2/kg pref. > 1500 m2/kg , pref. up to 2000 m2/g.

- Reference can be taken as to CaCO3 additives ("additions calcaires") to a cement from NF P 18- 508 (2012- 01) , see 4.3.1 (Blaine) (NF EN 196- 6) and 4.3.2 which defines the "Highly Fine" additives as having namely a d50 < 5 microns; which also refers to the "bleu de méthylène" test (NF EN 13639) (4.2.6) and other interesting definitions.

Quite representative examples of such useful UFs are :

- silica fumes ( d50 = about 1 - 2 microns),

- such as Condensil S 95 D d50 = 1.2 microns, Blaine > 1500 m2/kg BET = 16 m2/g

- metakaolin (that is calcined kaolins, d50 = about 3 to 5 - 6 microns) such as Premix MK™ d50 = 3 microns, Blaine = 3.8 m2/g

- chalks of d50 = about 1 to 5 microns d50,

- calcites of about 1 micron d50,

- Millicarb™ OG white limestone Orgon, France, (about 3 microns d50),

- marbles of about 1 to 5 - 6 microns d50,

- Durcal™ 1 or 2 white marble from Salses, France (d50 1 resp. 2 microns),

- "Etiquette violette" ( "EV") microcrystalline Champagne Whiting from Omey, France (about 2.4 micron d50),

- Ultrafine siliceous product (Sifraco™ C800 d50 : 1.86 - 2.4 micron BET = 2.7 m2/g)

- PCCs (precipitated calcium carbonates) such as of d50 = 1.52 micron

- Modified calcium carbonate (MCC) (such as of d50 = 2.29 $\mu$m) which is disclosed in US 6,666,953 .

When Blaine surface is not indicated in the present application, this only means that the standardized test is not adapted to the fineness of the considered product and/or to its morphology as is known to the skilled man.

Those products however meet the Blaine surface criteria or very high specific surface as reminded above.

Preferred UFs to be used in the present invention are : EV ™, silica fume SF, metakaolin MK , DUCAL™ 1 or 2 and their mixtures.

Modified calcium carbonates (MCC) and PCC can also be used as UF(s) as indicated above.

For completeness, one can say that when the d50 is above 6 one starts to regard the products as **"fillers" not "UFs"** any longer as already mentioned above.

**The "low - medium fillers"** which are used in the invention are coarse calcium carbonate(s) based filler(s), namely calcium carbonates of various origin such as marbles etc... and their blends, see the above definition, and can be optionally mixed with "non interfering" fillers, and with "non-interfering" routine, inert, "adjustment" additives.

*Evidently, some HP fillers can be also upgraded with the present invention, though they are already HP fillers.*

The said "treatment" of the filler(s) particles with the UF particles as mentioned above is performed by a mere mixing or blending .

It is quite surprising to notice that this mixing of coarse particles of fillers with UF particles leads to a "workable" product such as a cement composition or slurry. The general knowledge of the skilled man was that such a mix would lead to a mud-like, pasty, etc.... mixture, that is a definitely UNworkable and UNusable slurry. One merit of the inventors is to have overcome that solid prejudice.

* It is surprising to note that such a filling ("remplissement") of the voids between the coarser or coarse carbonate-based (low or medium) fillers particles with the ultrafine particles of the UF(s) **instead** of producing as expected a solid and strong mass of particles (due to the reduction of the interparticles voids and therefore the "compacting" of the whole mass), produces to the contrary an Unblocking effect and an upgrade effect from low/medium(standard) to HP/technical/fluid fillers.

\* As mentioned above, the second prejudice which the invention overcomes is that, when mix water is added, the said blend of low/medium fillers with UF(s) does not produce as expected a mud or pasty cement composition that would be Unworkable, but to the contrary a workable, non pasty, non sticky, cement composition with a large "galette" diameter in the "cone test" or "self-levelling test".

\* It is probably because one expected that the voids to be filled with UFs would create a solid and strong mass of compacted particles that one believed that no dispersion would be possible so that when adding mix water, a mud or pasty product would have to be expected. So the two prejudices overcome by the present invention were actually interconnected with each other for a skilled man, therefore creating a very solid (because very coherent) prejudice.

Non limitative but appropriate of low/medium carbonate)based fillers are:

Betocarb™ EC or SL d50 = 9, resp. 7 microns Blaine = 690, resp. 462 m2/g

Omyacarb™ 10 PB or ES origin Mexico d50 = about 10.8 resp. 10.4 ; Blaine = 361 m2/g d 50= 13.8 resp. Blaine 473 m2/g d50 =10.4

Betocarb™ SL from Salses, France d50 = 18 microns Blaine = 365 m2 / g

The said "treatment" of the low/medium(standard) filler(s) particles with the UF(s) particles as mentioned above is performed by a mere mixing or blending or kneading.

It is quite surprising to notice that this mixing of coarse particles of fillers with UF particles leads to a "workable" product such as a cement composition or slurry. The general knowledge of the skilled man was that such a mix would lead to a mud-like, pasty, etc.... mixture, that is a definitely UNworkable and UNusable slurry. One merit of the inventors is to have overcome that solid prejudice.

Actually, the Applicant (without wishing to be tied by a theory) is of the opinion that such a mix triggers an " UNblocking" of the filler (s) system of particles or grains, what in turn first "triggers" then promotes the mobility freedom of the particles with respect to each other.

This is NOT a fluidification process: this is a "trigger action" leading to an UNblocking process or sudden removal of interparticles interference/friction without which the rest of the properties cannot be reached and especially not the required fluidity.

This sudden removal of the "blocking" can also be linked to a concept of "filling" the "interparticles spaces" with UF particles, though this is again a non limiting theory.

As to the treating UFs they are as described above and may also contain non-interfering amounts of "inert" fillers".

In the above, **"interparticles"** has to be understood as globally all the kinds of particles present in the "cement" system: it can be mainly hydraulic binder and filler (coarse and UF) particles in case of a **cement** composition, or the same plus sand in case of a **mortar,** or the same plus sand and gravel (or any sort of know "aggregates") in the case of a **concrete.**

It is believed that this so "triggered" "Unblocking" function is one of the very key parameters allowing to appreciate the appropriate "treatment" .

This UNblocking effect can evidently be checked and appreciated by any skilled man from the routine self-levelling or "cone" test.

PROCESS OPTIONS

1 According to the best mode of the invention, as defined to date, the said low/medium/standard carbonate-based filler(s) is/are efficiently treated with UF(s) before being introduced in the kneading or mixing device **("pre-treatment" also named "initial"),** such as in an outside mixing Laboratory equipment; in the industrial scale, such a pre-treatment can be performed in an industrial device such as the **Lödige** mixer or any other industrial kneading or mixing equipment known to the art.

2 According to a less preferred embodiment, the said filler(s) is / are treated with UFs after having being introduced in the kneading or mixing device **("inside treatment")**. In such a case, the said filler(s) is / are efficiently treated with the efficient treating amount of the treating UFs being introduced in the kneading or mixing device either simultaneously or in a manner such that the filler(s) and the efficient amount of the treating UF(s) are introduced separately BUT at a very close location and time.

3 According to another embodiment, the said filler(s) is / are efficiently treated with the efficient treating amount of UF(s) partially before being introduced in the kneading or mixing device **("partial pre-treatment")** (such as in a well-known Lödige equipment) and partially after having been introduced in the pre-treated state in the said mixing or kneading device, the total of the two partial treatments being "efficient" in terms of treatment, with the second part or amount of the treating UF(s) being introduced in the kneading or mixing device either simultaneously with the pre-treated fillers or in a manner such that the pretreated filler(s) and the second part of the treating UF(s) are introduced separately BUT at a very close location and time

When the filler(s) is / are to be treated (with the UF(s)) at least partially inside the kneading or mixing device, the skilled man will understand that a corresponding amount or proportion of treating UF(s) has to be added directly into the said kneading or mixing device or in admixture with the considered filler just before the introduction in the kneading or mixing device, in the latter case, for example, this introduction is performed on the weighting device ("balance") which is provided just before the powdered products are introduced into the kneading or mixing device. "Just before" will be easily understood as a place and time where the filler(s) and UFs cannot or have no time to be mixed together, what would induce the beginning of the treatment. A good example is the "balance" where the two powders are placed together then almost immediately introduced, with no previous kneading or mixing, into the kneading or mixing device used to prepare the complete "cement" composition.

It is much preferred that the point and time of introduction of the said proportion of treating UF(s) be as close as possible to the point and time of introduction of the partially treated filler(s), so as not to be diluted in the pre-existing products already present in the mixing or kneading device (such as sand, gravel, mix water, optionally routine additives, so that the treating UF(s) be fully available for the filler(s).

This is also true in relation with the option "inside treatment".

In both options, actually, if the filler is added at a location and at a time too far form the location and time of the treating UFs, whatever the order of introduction, one could shift to a treatment which would be too late: this would actually make possible for the treating UFs to be "consumed" by other ingredients before the filler is introduced, or, in the case of a filler introduced first, lead to a late treatment that is the **"post - ajout"** mode ("post-addition" of the treating UF(s) a certain time after the filler has been introduced; one can see that the results of that mode are far lower than with a pre-treatment, a mixed treatment or an inside treatment according to the invention.

Any post ajout has to be avoided.

**"Efficient"** : In the above Process, the term "efficient" means that the treatment leads to a workable cement composition, according to the self-levelling test or "cone" test, as shown in Table A above, that is leads to a wide diameter of the "galette" **AND** to a fluid, non sticky, not thick, not "slow" product as could be seen by "visual inspection" , that is matches the **TWO** criterias required to reach the qualification as HP or FLUID or TECHNICAL "cement" (in the wide sense defined above) composition or system.

*As discussed above, it will be pure routine for a skilled man to perform a few self levelling tests, which are perfectly known to him a require no costly or voluminous equipment, and no "daunting task", so as to adapt the "efficient" dosage of the treating UFs) vs. the filler(s) and / or to define the moment the treatment can be stopped.*

As mentioned before, it is possible *and even preferable* to treat only ONE "low" or "medium" filler with ONE UF to lead to an HP or FLUID or TECHNICAL Filler system (Filler + UF) (and to a corresponding HP "cement" composition) or to treat several low or medium fillers with one or more UF(s), this depending on the products available on site.

It will be much simpler to treat ONE filler with ONE UF, since the relative proportions will be much easier to define by the self levelling cone.

The invention also covers such a

- A pre - blend of coarse (or optionally HP) "calcium carbonate - based filler" pre-blended with at least an UF as a new industrial product (as mentioned above, such a blend of coarse and UF fillers was not supposed to be possible, and was expected to lead to a mud like product when mixed with aqueous mixing fluid so that it is novel and surprising to design such a pre-blend, knowing that such a mix would be thereafter impossible to segregate again)

- B the aqueous compositions obtained by mixing the above blend (A) of coarse filler(s) with UF(s) with an aqueous system such as mix water, aqueous mix fluid, as a new industrial product

- A, or B being able to be delivered to the end user that way, optionally after any treatment allowing to ease the transportation and / or addition of routine, inert additives.

It is known, in Laboratory trials, and due to the small volumes or loads involved, to sometimes first place some small amount of "fluidifiers" in the bottom of the laboratory mixing device: some of those fluidifiers may be superplastifiers, many are not. However, even when some small amounts of superplastifiers - "fluidifiers" are present, they cannot interfere with the fillers pre-blend . They merely act as **fluidifiers,** so that they interact mainly with the other first constituents of the load, such as sand, gravel, mix water etc., which are malaxed together, alone, for a given period of time, so as to conveniently fluidize the particles or aggregates in the suspension; in this operation, they are "fixed" or "consumed" by the said aggregates particles that precisely need to be fluidized. If they were not, there would be no fluidification. Therefore, they are then no longer available for the fillers; even if, to be absolutely complete, we assume for a second that some (mandatorily very small amount) such fluidifier were quite partially and quite marginally available, it could only quite marginally interfere with the fillers pre-blend,

No prior art ever reported any improvement or upgrading which might have a relation with the fluidizers (many of fluidizers being additionally just plastifiers, not superplastifiers); no doubt that, especially in an R&D Laboratory, if such an upgrading had been noticed, it would have been reported. This is simply because the "trigger" effect for "unblocking" never occurred.

In the industrial scale, one most generally uses NO fluidifiers, or in some exceptional cases in minute amounts, and in order to "fluidize" the mix: there again, the fluidifiers are "used" to fluidify sand, gravel, etc. and are not available for the fillers, and therefore can in no way interact in the "unblocking" of the system, the essential part of the invention.

As indicated hereabove, the said low or medium filler(s) are made of calcium carbonate(s) or blends thereof, that is mainly GCCs or PCCs or blends of GCCs or blends of PCCs or blends of GCCs and PCCs.

As also mentioned, the coarse fillers can be HP fillers, though generally such HP fillers do not need to be upgraded, except for specific purposes. However, this is a possibility within the present invention.

The invention also covers the said

- "CEMENT COMPOSITIONS" (in the wide sense defined above) incorporating (A) or (B) above, and namely incorporating the said blend of low or medium (or optionally HP) coarse filler(s) treated with at least one UF,

- and their USE in any "cement" industry,

- and their use to manufacture "CEMENT ELEMENTS or PRODUCTS" so obtained from the said compositions,

- and the USE of such Cement elements or Products in the "cement" industries.

By "CEMENT ELEMENTS or PRODUCTS" it is meant in this whole application each and any piece of building or construction (or any piece or product for any other industrial purpose known to the skilled man, including off-shore cementing, or oil wells cementing, using "cement" compositions), such as blocks, forms, etc..., prepared from the said compositions.

By "cement" industries, we mean here any industry where the above products are known to receive a useful application, such as the building and construction industry, oilfield or geothermal cementing industry, and any such industry evidently known to the skilled man.

This will be detailed herebelow.

PRACTICAL DETAILS OF THE PROCESS

The general ranges can be defined as follows:

0.5 to 25 (preferably 5 to 15 % ) dry weight % of UF / **total** dry weight of coarse ( "low or medium" (standard) grade) (or optionally HP) carbonate- based Filler (s)  ) + UF (s)

The ratii will depend on the Filler and of the UF as selected, and again it will be absolutely easy and pure routine for the skilled man, by conducting a few self-levelling tests, to define the ratio corresponding to the requirements of the end-user.

We remind here that cone tests are very simple to perform, need very little (and well known) equipment, and provide quick results both quantitative ( diameter) and "global" (visual appreciation of the flow speed, of the tackiness or not, of the fluidity of not, of the release-or not of water etc...).

Preferred UFs in that context will be the EV (Etiquette violette ™ ), a silicafume SF such as S 95 D or C 800 , or a metakaolin such as Premix MK.

By decreasing cost, the best choice will be EV, then silica fume, then metakaolin.

Many routine fluidifiers, are known, such as described for example in the CHRYSO patent EP 0 663 892 .

Other products have been successfully tested as routine fluidifiers usable in the process of the invention to perform a surface treatment of the carbonate filler + UF pre-blend, such as the CHRYSO products described in the above cited EP patent, such as CHRYSO PREMIA 196 ™, which is reportedly a "modified polycarboxylate" or NRG 100 from Mappei™.

Some usual additives may be routinely added such as air entrainment agents, setting retarders or accelerators etc. at a place which is known from the skilled man.

As to the "powders" that is the cement and the fillers , the cement can be added first, then the filler, or the reverse, or they can be introduced together as a premix.

It is however preferred to introduce the cement and the filler together as a premix, so as to better ensure that both powders will be homogeneously mixed with and wet with the water.

The above are **batch** modes.

One can also think of **continuous** modes such as performing the addition in one of the above orders, for example in a kneading or mixing device equipped with an endless screw (with additions at various points along the length of the equipment), possibly with pre-mixes being added at some point(s), or as another example in a series of successive kneading or mixing devices, also with the possibility of adding premix(es) in one of the devices.

Batch modes are preferred and will be referred to here-below.

Routine tests can help the skilled man to select the most appropriate, in view of the available equipment, of the end user practice, and with the help of the following Tables and Figures which are attached to this application.

These ranges and ratii are supported by the following examples.

Those examples are for illustration purposes only and are non limitative and non restrictive of the invention.

With their assistance, and his common knowledge, the skilled man will be able to elaborate other combinations of fillers and will be able to characterize the result very quickly and very simply by the "cone test".

In the following examples, except if otherwise stated, the cement brand is the standardized cement 42,5 R Gaurain (CEM) having a water demand of 24.2%, and the sand is Standardized sand under Standard EN 196 - 1 (SAN).

**EXAMPLES**

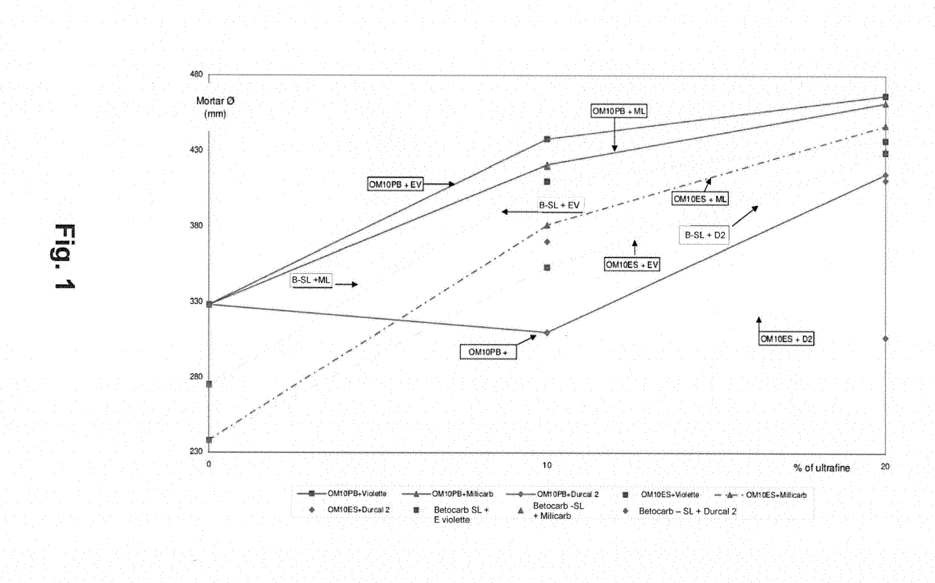

**Example 1 see attached Table B and attached Figure 1.**

**TABLE B**

| Trial N° | | A | B | C | D | E | F | G |
|---|---|---|---|---|---|---|---|---|
| | Product | OM10 alone Test 4g | OM10 + 10% Etiquette viol. Test 4g | OM10 + 10% Millicarb Test 4g | OM10 + 10% Durcal 2 Test 4g | OM10 + 20% Etiquette viol. Test 4g | OM10 + 20% Millicarb Test 4g | OM10+20% Durcal 2 Test 4g |
| | | mm | mm | mm | mm | mm | mm | mm |
| 2399/1 | OM10PB | 328 | 438 / 34% | 421 / 28% | 310 / -5% | 467 / 42% | 462 / 41% | 415 / 27% |
| 2399/2 | OM10ES | 238 | 353 / 48% | 381 / 60% | 353 / 48% | 429 / 80% | 447 / 88% | 307 / 29% |
| 2399/3 | BETOCARB SL | 275 | 410 / 49% | 420 / 53% | 370 / 35% | 437 / 59% | 430 / 56% | 411 / 49% |

It can be seen that

- the selected coarse (low) Filler is a calcium carbonate Betocarb SL™ (marble type from Salses, France) d50 = about 11 - 12 microns, or Omyacarb™ 10 PB or ES (marbles from Mexico ) (d50 = 10.4 and resp. 10.8 microns);

- the ultrafine treating UF is "Etiquette violette"™ (chalk type) d50 = 2.4 microns or Millicarb™ (calcite type) d50 = 3.2 microns or Durcal 2 ™ d50 = 2 microns.

- dosages in UF are respectively of 10 % dry weight / TOTAL low filler + UF or 20 %

- for information, 4g of fluidifier Chrysofluid Premia 196 ™ were routinely added in all tests.

Chrysofluid Premia 196 is a water-reducing agent , fluidifier, of the "modified polycarboxylate type" (manufacturers' notice) .

*The cement composition for laboratory testing is as below:*

| | |
|---|---|
| Water | 243 g |
| Cement (CEM-1 425 Gaurain ™ ) | 378 g |
| Low Filler or Low filler treated with UF TOTAL | 486 g |

( 486 g when no UF is used, or for example 436 , 386 when treated with resp. 50 or 100 g of each of the above mentioned UFs)

| | |
|---|---|
| Sand | 1350 g |
| Chrysofluid Premia 196 ™ fluidifier | 4 g |

***This cement composition will be used in ALL the examples in the present application***

One can see that, when compared to the Fillers with 0% of UF, the diameter values at 10 % and respectively 20% of each of the UFs are vastly increased.
It also comes from the values that in many cases EV provides a superior beneficial effect, see for example the evolution 438 (EV) 421 (Millicarb) 310 (Durcal 2) at 10 % or respectively 467 462 415 at 20 %.
However Millicarb can perform as well or even better than EV for certain Fillers, see 353 / 381 at 10 % or 429 / 447 at 20%, and also 410 / 420 at 10% last line (but same line EV becomes superior to Millicarb at 20 % 437 /430.
In all cases, Durcal 2 is the less efficient treating UF though quite acceptable values such as 411 or 415 can be reached at 20 % Durcal 2.
One can also see that in one case, first line of the Table, 10 % Durcal 2, there is a slight decrease in diameter ( - 5 % ).
This confirms that Durcal is the less efficient and that the best way to design a treatment resides in performing the routine cone test as in Table B.

**Example 2 see attached Table C**

| Reference Sample | A | | | B | | | C | D | |
|---|---|---|---|---|---|---|---|---|---|
| | 2252/1 | 2252/1 | 2252/1 | 2252/1 | 2252/2 | 2252/3 | 2252/5 | 2252/5 | 2252/1 |
| Reference | Lavigne 13µ ss disp | Lavigne 13µ +0,05% A | Lavigne 13µ +0,1% A | Lavigne 13µ + EV | Lavigne 18µ ss disp | Lavigne 8µ ss disp | Maffonne | Maffonne + EV | Lavigne 13µ + Betocarb HP-OG |
| Cement | 378 | 378 | 378 | 378 | 378 | 378 | 378 | 378 | 378 |
| $H_2O$ | 243 | 243 | 243 | 243 | 243 | 243 | 243 | 243 | 243 |
| Sand | 1350 | 1350 | 1350 | 1350 | 1350 | 1350 | 1350 | 1350 | 1350 |
| Filler | St Béat | St Béat | St Béat | St Béat / Violette | St Béat | St Béat | St Béat | St Béat | St Béat / BL200 |
| $CaCO_3$ | 486 | 486 | 486 | 436 / 50 | 486 | 486 | 486 | 436 / 50 | 436 / 50 |
| Fluidifier Premia 196 | 4 | 4 | 4 | 4 | | | 4 | 4 | 4 |
| Consistancy (> 350 mm) | 413 | 428 | 441 | 440 | | | 410 | 440 | 360 |
| Apsect | A2 | A2 | A2 | A2 | | | A2 | A2 | A2 |
| Observations | Slow flow Dilating mortar | Slow flow Dilating mortar | Slow flow Dilating mortar | Fluid mortar + somewhat settles | | | Flow still more slower Dilating mortar, more heavy | Good flow – Fluid mortar | Slow flow Dilating mortar |

*Test 4 g*

Table C

EP 2 634 151 A1

**Test with LAVIGNE marble**

The low filler is a marble Lavigne d50 13 microns.

The UF used to treat the above filler is Etiquette violette EV d50 = 2.4 microns

If we consider the lefthand column A ( Lavigne Filler with no UF treatment) we can see that the diameter in the cone test is 413 mm .

Despite the very good value of 413 mm for the diameter of the cone test, the slurry is flowing only slowly and is "dilating"; the overall result is therefore mitigated since the cone diameter is excellent but the flow test could be better.

Another test has been performed (not shown in the Table) with 3g of fluidifier instead of 4g : in that case, the mortar becomes "fluid" .

If we consider now the next column B to the right one can see that by replacing 486 g of Lavigne filler with 436 g of the same Lavigne filler but treated with 50 g of EV according to the invention, with 4 g of fluidifier Chrysofluid Premia 196 being present as above, the cement composition becomes fluid with a very high diameter of 440 mm (with the only disadvantage that it somewhat settles).

Here again, an adjustment of the fluidifier at 3g instead of 4g renders the mortar "fluid".

So, here again, the optimum is a treatment according to the invention with EV and in the presence of between 3 and 4 g of fluidifier, such as 3.4- 3.7 g, preferably 3.5 g.

This shows that the treatment with UFs according to the invention has a major impact on the cement composition properties.

**Test with MAFFONE Marble**

The same results are obtained with another low filler of the marble type, Maffone, next right columns C and D with or without treatment with 50 g EV.

Maffone is a marble of d50 = 13.62 microns

One can see that without the UF treatment according to the invention, the result is a diameter of 410 mm (the requirement is usually > 350 - 380, pref. > 420 and should be as high as possible) and the flow is "still slower" (than with Lavigne Filler).

On the contrary, with the treatment of the Maffone filler with 50 g EV according to the invention, the diameter becomes 440 mm (what is above 420) AND the visual test reveals a "good spreading" and a "fluid cement (or mortar) composition"; that is, BOTH criteria (diameter and visual test) are satisfactorily met.

*These results are particularly important when one considers that the Lavigne filler and the Maffone filler are low fillers of marble type which, when treated with a superplastifier according to* EP 10 008 803.8 filed on 24 Aug. 2010*, provide results which are very poor.*

This shows that Maffone and Lavigne marble fillers are very difficult to use and even very hard to upgrade from "low" to "HP". It is surprising to note that the mere treatment with an UF filler, according to the invention, Unblocks a Lavigne or Maffone cement system; providing a fluid and nicely flowing cement or mortar composition.

**Example 3 Influence of the treatment of a low Filler with an UF on the treatment with a superplastifier according to** EP 10 008 803.8

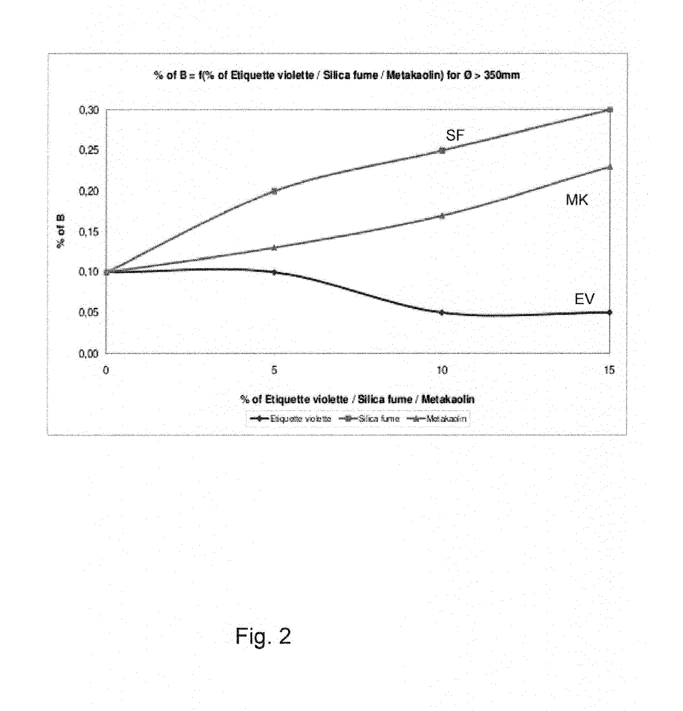

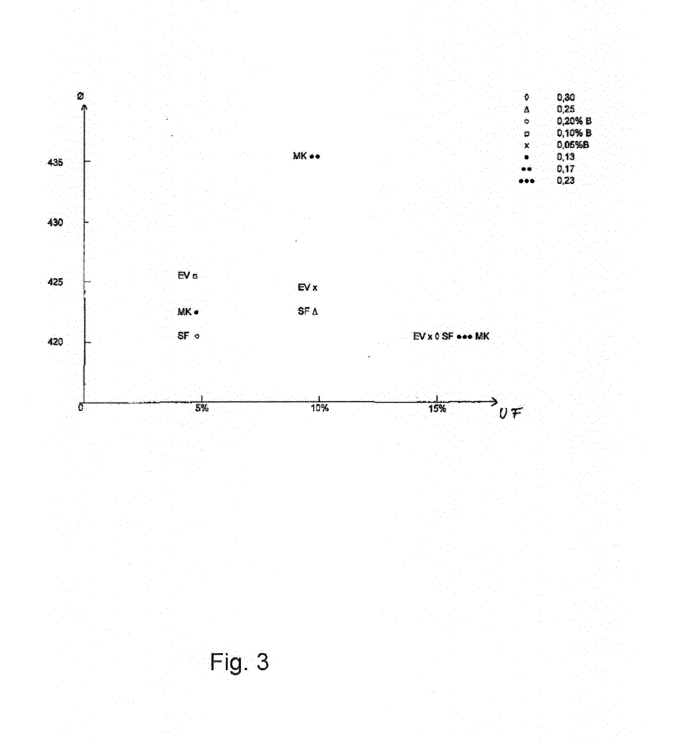

**See Table D and Figures 2 and 3.**

**TABLE D**

| Trial N° | Product | Betocarb SL alone | | Betocarb SL + 5% Etiquette viol. | | Betocarb SL+ 10% Etiquette viol. | | Betocarb SL + 15% Etiquette viol. | | Betocarb SL + 5% Silica fume | | Betocarb SL + 10% Silica fume | | Betocarb SL + 15% Silica fume | | Betocarb SL + 5% Metakaolin | | Betocarb SL + 10% Metakaolin | | Betocarb SL + 15% Metakaolin | |
|---|---|---|---|---|---|---|---|---|---|---|---|---|---|---|---|---|---|---|---|---|---|
| | | % B | mm | % B | mm | % B | mm | % B | mm | % B | mm | % B | mm | % B | mm | % B | mm | % B | mm | % B | mm |
| 2412/1 | Betocarb SL | 0,10 | 425 | 0,10 | 426 | 0,05 | 425 | 0,05 | 420 | 0,20 | 421 | 0,25 | 423 | 0,30 | 420 | 0,13 | 423 | 0,17 | 436 | 0,23 | 420 |

Betocarb SL is, when untreated, a low filler as defined above.

As can be seen in Table D it provides already an excellent cone test diameter when NOT treated with an UF (but having been treated with 0.10 % weight of a superplastifier - Product B described in the above mentioned EPA, so as to upgrade Betocarb SL from low to HP).

From the Table D it comes that when treated as in the above EPA (at the % indicated in Table D) and additionally treated with 5, 10, or 15 % of resp. EV (etiquette violette - violet label) , SF(silica fume), or MK (metakaolin) (all being UF as described above) it is possible to either reduce the need for the superplastifier (see for example the test at 10 or 15 % EV with only a quite minor decrease in diameter) or to reach a very high value in diameter (436) with 0.17 % MK (in such a case more superplastifier is needed but there is an important gain in diameter that is in flow and spreading in the cone test).

To be noted, Table D corresponds to a process where a PRE-BLEND ( LOW Betocarb SL d50 = 11 - 12 microns + % UF ) is then treated with the given % of Superplasticizer Product B.

Fig. 2 corresponds to the values in Table D and Fig. 3 shows each point from the Table D defined by:

*Diameter / %of superplastifier / added % of UF / nature of the UF*

From namely Fig. 2 and 3 the skilled man will be able to elaborate the best compositions and will able to appreciate the impact of each of the three UFs on the rheological behavior of a cement containing an HP Filler treated with various % of EV, SF or MK (and with a superplastifier as in the above EPA).

### Example 4 Influence of a BLEND of two UFs on a LOW Filler

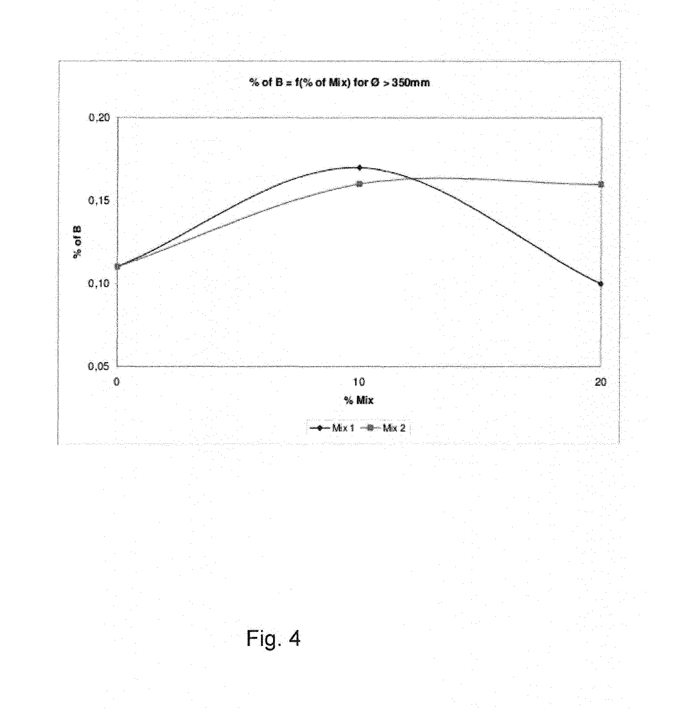

### See Table E and Fig. 4

**TABLE E**

| Trial N° | Product | Betocarb SL alone | | Betocarb SL + 10% Mix 1 | | Betocarb SL+ 10% Mix 2 | | Betocarb SL + 20% Mix 1 | | Betocarb SL + 20% Mix 2 | |
|---|---|---|---|---|---|---|---|---|---|---|---|
| | | % B | mm | % B | mm | % B | mm | % B | mm | % B | mm |
| 2415/1 | Betocarb SL | 0,11 | 425 | 0,17 | 435 | 0,16 | 432 | 0,10 | 432 | 0,16 | 428 |
| | | | | | | | | | | | |
| | | | | | | | | | | | |

It can be seen from the Table E and Fig. 4 that when one treats a LOW Filler, here Betocarb SL, with 0.11 % dry weight of Product B of the above EPA, according to the said EPA, the diameter in the cone test is 425 mm. This corresponds to a very efficient upgrading from low to HP, according to the above EPA.

The present test shows that it is possible to alter this result by adding a blend of UFs.

It can be seen that, when pre-blending the LOW Betocarb SL with Mix 1 or Mix 2 then treating the pre-blend with the given % of Product B superplastifier from the above EPA, Mix 2 (65 % EV / 35 % MK by dry weight) always leads to an increase need in Product B, up to a plateau at about 0.17 %

To the contrary, the same process, when performed with Mix 1 ( 65 % EV / 35 % SF by dry weight) leads to an increase of the need in Product B with a maximum at 10 % Mix 1 / TOTAL Betocarb SL + Mix 1 by dry weight, then leads to a decrease . One can see that the same level of Product B ( 0.11% ) is reached for about 17% of Mix 1, then the need in Product B decreases to 10 % at 20 % Mix 1.

The Applicant is of the opinion that the two curves will follow the same shape and tendency shortly above 20 % but will thereafter lead to an renewed increase in the demand for Product B (in order to maintain the result of > 420 mm in diameter), the increase being due to the very high BET surface of the UFs namely EV likely to provoke a new "blocking" of the system of particles, which could be Unblocked only with a higher amount of Product B. Therefore, a process as above where from 17-18 % to 25 % of Mix 1 , with an optimum around 20 - 23 % , 20 % being the preferred value , is used allows to significantly reduce the demand in Product B.

This test also shows that one can use mixes of UFs to treat a LOW Filler (such as the untreated Betocarb SL) without blocking the system of particles, provided the % of Mix be between 15 - 17 and 23 - 25 % and provided a blend of EV + SF is preferred, rather than using a mix containing MK.

This test also serves the purpose to providing the skilled man with additional information about the behavior and impact of various UFs and two UF mixes on a coarser and "low" system of filler particles, so that the skilled man can still more easily elaborate his own combinations of Filler(s) and UF(s).

### Example 5 Influence of a PCC and a Modified GCC as UFs

### See Table F

**TABLE F**

| Trial N° | Feed Product | Addition of PCC | Addition of MCC | Results for Premia 196 = 4g | Notes |
|---|---|---|---|---|---|
| | | % | % | mm | |
| Specimen | Betocarb HP-OG | 0 | 0 | 473 | reference Ø |
| B2 | Omyacarb 10 - PB | 0 | 0 | 448 | ok |
| B3 | Omyacarb 10 - PB | 10 | 0 | 435 | ok |
| B4 | Omyacarb 10 - PB | 20 | 0 | 385 | correct |
| B5 | Omyacarb 10 - PB | 0 | 10 | 0 | no flow plasticine aspect |
| B6 | Omyacarb 10 - PB | 0 | 20 | 0 | wetland dry +++ |
| B7 | Omyacarb 10 - ES | 0 | 0 | 453 | ok |
| B8 | Omyacarb 10 - ES | 10 | 0 | 435 | ok |
| B9 | Omyacarb 10 - ES | 20 | 0 | 395 | correct |
| B10 | Omyacarb 10 - ES | 0 | 10 | 0 | wetland dry + |
| B11 | Omyacarb 10 - ES | 0 | 20 | 0 | wetland dry +++ |

In this example, the UF which is used in the process of the invention is either:

- a PCC (precipitated calcium carbonate) d50= 1.52 micron

- or MCC d50 = 2.29 microns

One adds routinely 4 g of Chryso Premia 196 fluidifier in the composition.

As a reference, the LOW filler (d50 = 7 microns, Blaine surface = 462 m2/g) is BETOCARB HP ™ OG , from Orgon, France; is used. Without any treatment with UF nor by a superplastifier, the obtained diameter is excellent (460 mm) but the flow rate is very low. This product Betocarb HP OG serves as a reference only for the cone test diameter.

The test is conducted with above described LOW fillers OMYACARB 10 PB or ES as described above with 0, 10 , or 20 % dry weight treatment with the UF PCC or MCC.

At 0 % of treatment, the diameter is excellent for PB specimen (448) and even better for ES ( 453 ); it is reminded here that the target values as to the cone test diameter are > 350 mm, pref. > 400, most pref. > 420 mm, depending on the intended final use of the cement composition and of the cement composition itself.

However, as to the aspect by visual inspection during the cone test, at 0 % UF the mortar composition shows a "plastic aspect" for PB and is "sticky" for ES; these behaviors are NOT acceptable (non workable composition despite the high diameter) what confirms the global LOW character of the ES and PB fillers.

When treating with UF according to the process of the invention:

PB Specimen:

- at 10 % PCC the diameter is good (435) and the workability is "OK" so that the two criterias are met, and the filler has been upgraded from LOW to HP;

- at 20 % PCC the diameter is down to 385 (still acceptable) and the workability is just "correct"; the upgrade is still there, but one seems to reach a limit of the UF treatment efficiency;

- at 10 or 20 % MCC the results regarding both criterias are disastrous: no upgrade at all, and even a dramatic degradation of the properties.

ES Specimen:

- exactly the same comments as above.

This test shows that PCC can be used as treating UFs but with a slight decrease in diameter and a degradation of the visual aspect (workability) above 10 % UF by dry weight of UF/ UF+LOW Filler.

PCC has a clearly less negative effect than MCC.

This test is again aimed at providing the skilled man with additional data allowing him to elaborate his own compositions as targeted in view of his specific intended application.

**Example 6 Influence of a treatment with a superplastifier Product B on a pre-blend of a LOW Filler and of various UFs.**

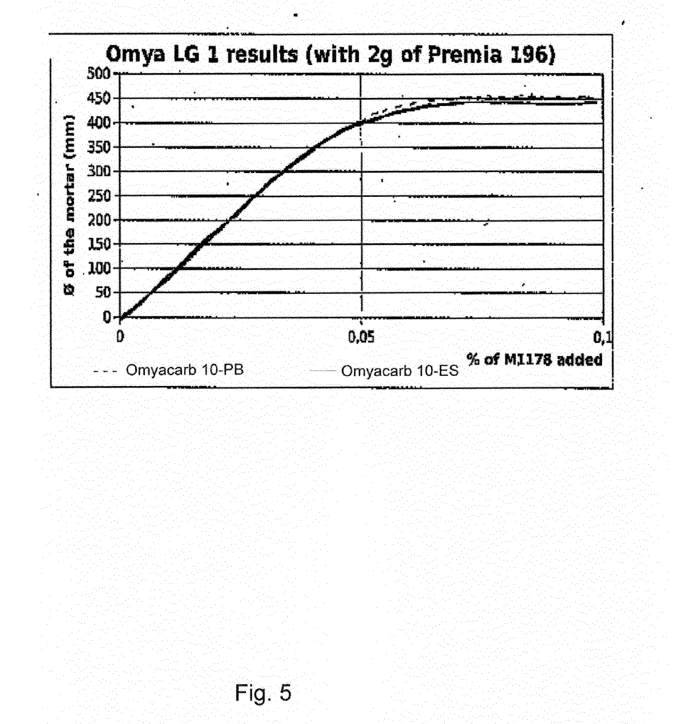

**See Table G and Fig. 5**

<div align="center">TABLE G</div>

|  | H2O | Cement | Betocarb HP-OG | OM10PB | OM10ES | Sand | A | | Chrysofluid Premia 196 | results | Notes |
|---|---|---|---|---|---|---|---|---|---|---|---|
|  | (g) | (g) | (g) | (g) | (g) | (g) | (g) | (% d/d) | (g) | (mm) |  |
| Specimen | 243 | 378 | 486 | 0 | 0 | 1350 | 0 | 0 | 2 | 445 | specimen |
| C1 | 243 | 378 | 0 | 486 | 0 | 1350 | 0 | 0 | 2 | < 50 | no flow |
| C2 | 243 | 378 | 0 | 486 | 0 | 1350 | 0,7 | 0,05 | 2 | 395 | ok |
| C3 | 243 | 378 | 0 | 486 | 0 | 1350 | 1,4 | 0,10 | 2 | 450 | same Ø as specimen but mortar settles |
| C4 | 243 | 378 | 0 | 0 | 486 | 1350 | 0 | 0 | 2 | < 50 | no flow |
| C5 | 243 | 378 | 0 | 0 | 486 | 1350 | 0,7 | 0,05 | 2 | 396 | ok |
| C6 | 243 | 378 | 0 | 0 | 486 | 1350 | 1,4 | 0,10 | 2 | 445 | same Ø as specimen but mortar settles |

The cement composition (here, a mortar) is provided in Table G. As mentioned above, it is the same as in ALL the examples presented in the present application, with the possible exception of minor variations in the amount of the routine fluidifier and/or in some examples in the addition or not, for comparison purposes, of a minor % of superplastifier as in the above-cited EPA.

The reference (no treatment with UF) for the cone test diameter is Betocarb HP-OG LOW filler as described above. It is of 445 mm but the visual aspect in the cone test is not acceptable (this is, as indicated above, because the TWO criterias are not simultaneously met that this filler is "low").

In the tests, the same low fillers as above, OMYA CARB 10 ES or PB marbles are used.

2g of routine fluidifier CHRYSO Premia 196 are used in all tests.

0.005 % and resp. 0.10 % of Product B as defined in EPA n° 10 008 803.8 are used to treat the low filler OMYACARB 10 ES or PB according to the said EPA.

It can be seen that for an addition of 0.05 % of Product B superplastifier, the flow rate in a cone test is "ok" but the diameter is lower than that of the Betocarb HP-OG reference.

At 0.10 % Product B it is possible to reach the same diameter as the reference but the visual test in a cone test is bad: the mortar settles.

This test shows that for the considered marbles the only efficient option resides in a treatment of the low marble filler with UF(s).

However, from Fig. 5 it can be seen that even for the considered marbles, the treatment with a superplastifier as in the above EPA is a good option provided that the % of Product B is around 0.04 % when a diameter of 350 mm is reached (lower limit of the acceptable range) with a flow speed in a cone test which is slightly better than the "ok" obtained at 0.05 %.

## Claims

1. Process for the preparation of **"High performance", "HP",** or **"FLUID",** or **"technical",** cement or mortars or concrete systems or compositions (hereafter for simplicity **"cements"** or **"cements systems"** or **"cement compositions"** or **"cements")** having an improved compacity, an improved flowability (and globally speaking a definitely improved **"workability"**, **characterized in that** it comprises at least one step in which

   low or medium (or standard) (or optionally HP), coarse, carbonate-based filler(s)
   is/are upgraded to an HP or FLUID grade by treatment with an efficient amount of at least one treating agent consisting of, or comprising,
   ultrafine filler(s) particles or "UF(s)".

2. Process according to claim 1 **characterized in that** the said upgrade is performed by blending or mixing the said coarse filler(s) with the said ultrafine filler(s) UF(s)

3. Process according to any of the preceding claims **characterized in that** it is conducted in the presence of a small amount of a fluidifier.

4. Process according to claim 3 **characterized in that** the said amount or proportion of fluidifier is from 3 and 4 g of fluidifier, such as 3.4 - 3.7 g, preferably 3.5 g 0.03 to 2% by dry weight /total weight of the cement composition.

5. Process according to any of the preceding claims **characterized in that** the said UF treatment step uses from 0.5 to 25 (preferably 5 to 15%) dry weight % of UF(s) / total dry weight of coarse ("low or medium" (standard) grade) (or optionally HP) carbonate-based Filler(s)) + UF(s)

6. Process according to any of the preceding claims **characterized in that** the **"Ultrafines** filler(s) **particles"** or **"UFs"** are defined by

   - a **d50** from about 1 micron to about 5 or 6 microns, preferably from 1 to 3 microns, and still better of about 2
   - 3 microns, usually <5 microns.
   - and
   - a high specific surface , usually defined as **BLAINE** > 1000 m2/kg pref. > 1500 m2/kg, pref. up to 2000 M2/g.

7. Process according to any of the preceding claims **characterized in that** the said UFs are selected among :

- silica fumes (d50 = about 1 - 2 microns),
- metakaolin (calcined kaolins, d50 = about 3 to 5 - 6 microns),
- chalks of d50 = about 1 to 5 microns d50,
- calcites such as (about 1 micron d50),
- about 3 microns d50),
- marbles of about 1 to 5 - 6 microns d50,
- ultrafine calcium carbonate (d50 1 resp. 2 microns),
- (about 2.4 micron d50),
- Ultrafine siliceous product d50 : 1.86 - 2.4 micron BET = 2.7 m2/g)
- PCCs (precipitated calcium carbonates) such as of d50 = 1.52 micron
- Modified calcium carbonates ("MCC") such as of d50 = 2.29 microns

8. Process according to any of the preceding claims 6 or 7 **characterized in that characterized in that** UFs are selected among: ultrafine calcium carbonates, silica fume, metakaolin, Modified calcium carbonates (MCC) and PCC. and their mixtures,

9. Process according to any of the preceding claims **characterized in that characterized in that** the said coarse calcium carbonate - based filler(s) contain(s) only calcium carbonate(s) (possibly of various origins, such as various natural rocks (GCCs) or various PCCs) which means *with no other filler of a different type,* such as kaolin, bentonite, etc. and is/are preferably provided (when the filler(s) is/are or contain(s) GCC(s)) by a carbonated rock or more generally mineral material(s) comprising at least 50 - 65 % by weight (dry) of $CaCO_3$, preferably more than 80 %, still more preferably more than 90 %;

10. Process according to any of the preceding claims **characterized in that** the said coarse filler(s)s are selected among:

- natural calcium carbonate(s) or ground calcium carbonate(s) (GCC(s)) such as, non limitatively, GCC from marble, chalk, calcite, or from other natural and well-known forms of natural calcium carbonates which preferably meet the above % criteria;
- PCC(s) which is a precipitated calcium carbonate,
- or a mixture of said $CaCO_3$ - containing rocks or mineral materials with each other as well as blends or mixtures of GCC(s) and PCC(s).

11. Process according to any of the preceding claims **characterized in that** the said coarse, low/medium carbonate-based fillers are selected among:

- a coarse calcium carbonate d50 = 7 microns Blaine = 462 m2/g
- a coarse calcium carbonate d50 = about 13.3 10.8 10.4
- a coarse calcium carbonate d50 = 15 microns Blaine = 365 m2 / g

12. Process according to any of the preceding claims **characterized in that** in the considered coarse filler(s) the GCC / PCC ratio is from 0 - 100 to 100 - 0 % by dry weight, preferably from 30 - 70 to 70 /30 % by dry weight.

13. Process according to any of the preceding claims **characterized in that** the said low/medium/standard (or optionally HP) carbonate-based filler(s) is/are efficiently treated with UF(s) before being introduced in the kneading or mixing device **("pre-treatment" also named "initial"),** such as in an outside mixing Laboratory equipment or, in the industrial scale, such a pre-treatment isperformed in an industrial device such as an industrial mixer or any other industrial kneading or mixing equipment.

14. Process according to any of the preceding claims 1 to 13 **characterized in that characterized in that** the said filler (s) is/are treated with UFs after having being introduced in the kneading or mixing device **("inside treatment")** and the said filler(s) is / are efficiently treated with the efficient treating amount of the treating UFs being introduced in the kneading or mixing device either simultaneously or in a manner such that the filler(s) and the efficient amount of the treating UF(s) are introduced separately BUT at a very close location and time.

15. Process according to any of the preceding claims 1 to 13 **characterized in that** the said filler(s) is / are efficiently treated with the efficient treating amount of UF(s) partially before being introduced in the kneading or mixing device **("partial pre-treatment")** and partially after having been introduced in the pre-treated state in the said mixing or kneading device, the total of the two partial treatments being "efficient" in terms of treatment, with the second part or amount of the treating UF(s) being introduced in the kneading or mixing device either simultaneously with the pre-treated fillers or in a manner such that the pretreated filler(s) and the second part of the treating UF(s) are introduced separately BUT at a very close location and time.

16. Process according to claim 15 **characterized in that** when the filler(s) is / are to be treated at least partially inside the kneading or mixing device, a corresponding amount or proportion of treating UF(s) has to be added directly into the said kneading or mixing device or in admixture with the considered filler just before the introduction in the kneading or mixing device, in the latter case, for example, this introduction is performed on the weighting device ("balance") which is provided just before the powdered products are introduced into the kneading or mixing device.

17. Process according to any of the preceding claims **characterized in that** only ONE "low" or "medium" filler is treated with ONE UF or with a mix of two UF(s).

18. Process according to any of the preceding claims **characterized in that** ONE filler is treated with ONE UF.

19. Process according to any of the preceding claims **characterized in that** it is performed under the following conditions:

0.5 to 25 (preferably 5 to 15 % ) dry weight % of UF(s) / **total** dry weight of coarse ( "low or medium" (standard) grade) (or optionally HP) carbonate-based Filler(s) ) + UF(s)

20. Process according to any of the preceding claims **characterized in that** the fluidifier is a modified polycarboxylate.

21. Process according to any of the preceding claims **characterized in that** the cement is added first, then the filler, or the reverse, or they can be introduced together as a premix.

22. Process according to any of the preceding claims **characterized in that** the cement and the filler are introduced together as a premix.

23. Process according to any of the preceding claims **characterized in that** it is performed in a batch mode, or in a continuous mode.

24. Process according to any of the preceding claims **characterized in that characterized in that** it contains one or more steps where usual additives may be added such as air entrainment agents, setting retarders or accelerators.

25. Product **characterized in that** it consists of, or comprises, a blend of coarse (or optionally HP) "calcium carbonate - based filler(s)" pre-blended with at least an UF, as defined in any of the preceding claims.

26. Product **characterized in that** it consists of, or comprises, an aqueous compositions obtained by mixing the blend of coarse filler(s) with UF(s) of claim 25 and as defined in any of the preceding claims with an aqueous system such as mix water, aqueous mix fluid.

27. "CEMENT COMPOSITIONS" (in the wide sense defined above) **characterized in that** they incorporate the said blend or aqueous composition according to the preceding claims 25 or 26, namely the said blend of low or medium (or optionally HP) coarse filler(s) treated with at least one UF.

28. USE of the said blend, or aqueous compositions and cement composition according to claims 25 to 27 in any "cement" industry such as the building and construction industry, oilfield or geothermal cementing Industries.

29. USE of the said blend, aqueous compositions and cement composition according to claims 25 to 27 to manufacture "CEMENT ELEMENTS or PRODUCTS" so obtained from the said compositions.

30. Cement elements or products such as blocks for building or construction as manufactured under the preceding claims.

31. Use of such Cement elements or Products in the cement industries.

Fig. 1

Fig. 2

Fig. 3

Fig. 4

**Omya LG 1 results (with 2g of Premia 196)**

- - - Omyacarb 10-PB     —— Omyacarb 10-ES

Fig. 5

Europäisches
Patentamt

European
Patent Office

Office européen
des brevets

**EUROPEAN SEARCH REPORT**

Application Number

EP 12 00 1320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 145 869 A1 (LAFARGE SA [FR]) 20 January 2010 (2010-01-20) * the whole document * | 1-31 | INV. C04B14/28 C04B28/02 C04B40/00 |
| X | WO 2007/057510 A1 (NORDKALK OYJ ABP [FI]; VIRTANEN PENTTI [FI]) 24 May 2007 (2007-05-24) * pages 1-8 * | 1-31 | |
| X | FR 2 910 479 A1 (COATEX SAS [FR]) 27 June 2008 (2008-06-27) * the whole document * | 1-26 | |
| X | FR 2 753 637 A1 (BOUYGUES SA [FR]) 27 March 1998 (1998-03-27) * the whole document * | 1-31 | |
| X | DATABASE WPI Week 200481 Thomson Scientific, London, GB; AN 2004-814688 XP002684925, & CN 1 526 675 A (UNIV NANJING POLYTECHNIC) 8 September 2004 (2004-09-08) * abstract * | 1-31 | TECHNICAL FIELDS SEARCHED (IPC) C04B |
| X | WO 2010/109095 A1 (LAFARGE SA [FR]; FORNOLLOSA PHILIPPE [FR]; BATOZ JEAN-FRANCOIS [FR]; C) 30 September 2010 (2010-09-30) * pages 1-8 * * example 1 * | 1-31 | |

The present search report has been drawn up for all claims

| Place of search | Date of completion of the search | Examiner |
|---|---|---|
| Munich | 10 October 2012 | Gattinger, Irene |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 00 1320

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2012

| Patent document cited in search report | | Publication date | Patent family member(s) | | Publication date |
|---|---|---|---|---|---|
| EP 2145869 | A1 | 20-01-2010 | NONE | | |
| WO 2007057510 | A1 | 24-05-2007 | CN | 101400621 A | 01-04-2009 |
| | | | EP | 1954644 A1 | 13-08-2008 |
| | | | FI | 20051183 A | 19-05-2007 |
| | | | JP | 2009515805 A | 16-04-2009 |
| | | | US | 2009090278 A1 | 09-04-2009 |
| | | | WO | 2007057510 A1 | 24-05-2007 |
| FR 2910479 | A1 | 27-06-2008 | CN | 101563428 A | 21-10-2009 |
| | | | EP | 2125966 A1 | 02-12-2009 |
| | | | FR | 2910479 A1 | 27-06-2008 |
| | | | JP | 2010513738 A | 30-04-2010 |
| | | | KR | 20090089861 A | 24-08-2009 |
| | | | RU | 2009127696 A | 27-01-2011 |
| | | | US | 2010095869 A1 | 22-04-2010 |
| | | | WO | 2008084313 A1 | 17-07-2008 |
| FR 2753637 | A1 | 27-03-1998 | NONE | | |
| CN 1526675 | A | 08-09-2004 | NONE | | |
| WO 2010109095 | A1 | 30-09-2010 | AU | 2010227375 A1 | 20-10-2011 |
| | | | CA | 2754293 A1 | 30-09-2010 |
| | | | CN | 102361834 A | 22-02-2012 |
| | | | EP | 2411342 A1 | 01-02-2012 |
| | | | FR | 2943663 A1 | 01-10-2010 |
| | | | KR | 20120015429 A | 21-02-2012 |
| | | | MA | 33207 B1 | 02-04-2012 |
| | | | US | 2012037045 A1 | 16-02-2012 |
| | | | WO | 2010109095 A1 | 30-09-2010 |

EPO FORM P0459

**EP 2 634 151 A1**

**Patent documents cited in the description**

- EP 0663892 A
- FR 2815627
- FR 2815629
- WO 2008107790 A
- EP 0099954 A
- US 6666953 B
- EP 100088038 A